(19) Europäisches Patentamt
European Patent Office
Office européen des brevets

(11) **EP 3 012 556 B1**

(12) **EUROPEAN PATENT SPECIFICATION**

(45) Date of publication and mention
of the grant of the patent:
**26.12.2018 Bulletin 2018/52**

(21) Application number: **13887161.1**

(22) Date of filing: **19.06.2013**

(51) Int Cl.:
*F25B 1/00* *(2006.01)*          *C09K 5/04* *(2006.01)*
*F25B 49/02* *(2006.01)*          *F25B 9/00* *(2006.01)*
*F25B 13/00* *(2006.01)*

(86) International application number:
**PCT/JP2013/066868**

(87) International publication number:
**WO 2014/203356 (24.12.2014 Gazette 2014/52)**

(54) **REFRIGERATION CYCLE DEVICE**

KÄLTEKREISLAUFVORRICHTUNG

DISPOSITIF DE CYCLE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.04.2016 Bulletin 2016/17**

(73) Proprietor: **Mitsubishi Electric Corporation
Tokyo 100-8310 (JP)**

(72) Inventors:
• **KATO, Yohei
Tokyo 100-8310 (JP)**
• **OKAZAKI, Takashi
Tokyo 100-8310 (JP)**
• **ITO, Daisuke
Tokyo 100-8310 (JP)**
• **UGAJIN, Yuki
Tokyo 100-8310 (JP)**
• **MAEYAMA, Hideaki
Tokyo 100-8310 (JP)**
• **SUZUKI, Yasuhiro
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 2 562 490          WO-A1-96/01882
JP-A- H10 506 131          JP-A- 2001 153 477
JP-A- 2001 227 828          JP-A- 2002 098 421
JP-A- 2010 007 874          JP-A- 2010 065 982
JP-A- 2010 065 982          JP-A- 2011 226 729
JP-A- 2012 131 994**

**Description**

Technical Field

The present invention relates to a refrigeration cycle apparatus.

Background Art

In a field of car air-conditioners, HFO-1234yf (CF3CF=CH2), or propylene based fluorohydrocarbon has been used as low GWP (global warming potential) refrigerant.

In general, the propylene based fluorohydrocarbon having a double bond in the composition, as described above, has a feature that decomposition and polymerization occur easily under high temperature conditions due to presence of the double bond. Consequently, a configuration of compressor has been disclosed, wherein decomposition and polymerization of refrigerant are suppressed by forming a surface of a metal sliding unit to be heated to a high temperature in a compressor from a nonmetal component (refer to Patent Literature 1).

Meanwhile, in contrast to the refrigeration cycle apparatus by using the propylene based fluorohydrocarbon having a double bond in the composition, a refrigeration cycle apparatus, wherein a cause of decrease in the amount of circulation of refrigerant is judged, has been proposed as a previously known refrigeration cycle apparatus (refer to Patent Literature 2). In this refrigeration cycle apparatus, whether the cause of decrease in the amount of circulation of refrigerant is ascribed to clogging of an expansion device with sludge or a leakage of refrigerant from a refrigerant circuit is judged.

In this regard, examples of common sludge clogged in the expansion device include oils not dissolving into refrigerant, such as, cutting oil and rust-inhibiting oil, adhering to pipes and compressor components constituting the refrigeration cycle apparatus in machining of them and refrigerating machine oil and cutting oil deteriorated because of high temperatures in the case where contact of metals occur in the sliding unit of the compressor.

EP2562490A1 discloses a refrigerator including a refrigerant circulation path in which a refrigerant discharged from a compressor is sucked into the compressor through a condenser, an expansion mechanism and an evaporator, characterized in that in the refrigerant circulation path, a refrigerant in which hydrofluorocarbon having no double bond is mixed is charged into a refrigerant having the hydrofluoroolefin as a base ingredient, and the refrigerant circulation path is provided therein with a fibrous filter which traps refrigerant reactant. JP2010065982A discloses a refrigerating cycle device to accurately determine presence or absence of an abnormality and an abnormality point such as clogging of a circuit component of a refrigerating cycle device under any environmental condition or installation condition.

JP2002098421A provides an air conditioner to enable improvement of proof stress of choking due to sludge without increasing cost even when an electronic control type expansion valve in a pressure reducer is used and further enable reliable detection of clogging state even when a clogging state due to sludge occurs.

WO9601882A1 discloses Coolants comprising 1,1-difluoroethylene and one or a plurality of hydrofluoroalkanes, particularly difluoromethane, trifluoromethane, 1,1-difluoroethane, 1,1,1-trifluoroethane, 1,1,1,2-tetrafluoroethane and/or pentafluoroethane.

Citation List

Patent Literature

Patent Literature 1: Japanese Unexamined Patent Application Publication No. 2009-299649
Patent Literature 2: Japanese Unexamined Patent Application Publication No. 2009-250554

Summary of Invention

Technical Problem

The HFO-1234yf, or propylene based fluorohydrocarbon has a standard boiling point of a high -29 degrees C and, as compared with R410A refrigerant (standard boiling point -51 degrees C) and the like used for stationary air-conditioning apparatuses previously, the operating pressure is low and the refrigeration capacity per suction volume is small. In order to obtain the same refrigeration capacity as that of the R410A refrigerant with the stationary air-conditioning apparatus by using the HFO-1234yf refrigerant, the volume flow rate of the refrigerant has to be increased, and there are an issue to increase the displacement of the compressor and issues of an increase in pressure loss and reduction in efficiency along with the increase in volume flow rate.

Therefore, in order to apply the low GWP refrigerant to the stationary air-conditioning apparatus, low GWP refrigerant having a low standard boiling point is appropriate. In general, it is known that a molecular structure having a small carbon number serves as refrigerant having a low boiling point.

Then, the present inventors conducted research on compounds with molecular structures having the carbon number smaller than that of the previously known propylene based fluorohydrocarbon having the carbon number of 3 with much trial and error and considered to use an ethylene based fluorohydrocarbon having the carbon number of 2, among various compounds, as the refrigerant.

In the case where this ethylene based fluorohydrocarbon can be used as the refrigerant, refrigerant provided with low boiling point properties equivalent to those of the previously known R410A refrigerant can be obtained.

However, the ethylene based fluorohydrocarbon has high reactivity and is thermally chemically unstable, so that decomposition and polymerization occur easily, as compared with the propylene based fluorohydrocarbon. Consequently, in the case where the ethylene based fluorohydrocarbon is used as the refrigerant, it is difficult to suppress decomposition and polymerization by only forming the surface of the sliding unit of the compressor from the nonmetal component, as shown in Patent Literature 1, and it is feared that clogging of the expansion device with products generated by polymerization (hereafter may be referred to as sludge due to polymerization) occurs.

Therefore, in the case where the ethylene based fluorohydrocarbon is used as the refrigerant, a configuration to detect clogging of the expansion device is required. Then, it is considered that the technology, which is described in Patent Literature 2, to detect clogging of the expansion device is adopted in the refrigeration cycle apparatus by using the ethylene based fluorohydrocarbon as the refrigerant.

However, the technology described in Patent Literature 2 is to detect one of clogging of the expansion device or decrease in the amount of refrigerant in the refrigerant circuit and is not to detect both of them. On the other hand, in the case where the ethylene based fluorohydrocarbon is used as the refrigerant and sludge due to polymerization is generated, both clogging of the expansion device and the like and decrease in the amount of refrigerant in the refrigerant circuit occur in the refrigeration cycle apparatus. Consequently, in the case where the ethylene based fluorohydrocarbon is used as the refrigerant, there is a problem that the technology described in Patent Literature 2 cannot judge whether the cause of the decrease in the amount of circulation of refrigerant is ascribed to sludge due to polymerization.

That is, in the case where the ethylene based fluorohydrocarbon is used as the refrigerant in the refrigeration cycle apparatus, there is a problem that the cause of the decrease in the amount of circulation of refrigerant cannot be investigated by the previously known technology and repair works take much time.

The present invention has been made to solve the above-described problems, and it is an object to provide a refrigeration cycle apparatus, wherein clogging of an expansion device ascribed to sludge due to polymerization can be detected.

Solution to Problem

According to the invention defined in appended independent claims 1, 2 and 3, a refrigeration cycle apparatus is provided with a refrigerant circuit including at least a compressor, a condenser, an expansion device, and an evaporator and using an ethylene based fluorohydrocarbon or a mixture containing the ethylene based fluorohydrocarbon as refrigerant, a controller configured to control a rotation speed of the compressor and an opening degree of the expansion device, a clogging amount detection device configured to detect a clogging amount of the expansion device, and a polymerization amount estimation device used for estimating an amount made up by a product generated through polymerization of the refrigerant in substances causing clogging of the expansion device.

Advantageous Effects of Invention

The refrigeration cycle apparatus according to the present invention is provided with the clogging amount detection device to detect a clogging amount of the expansion device and the polymerization amount estimation device used for estimating an amount made up by the product generated through polymerization of the refrigerant in substances causing clogging of the expansion device. Consequently, in the refrigeration cycle apparatus according to the present invention, clogging of the expansion device ascribed to sludge due to polymerization can be detected and, thereby, repair works can be performed promptly.

Brief Description of Drawings

Fig. 1 is a configuration diagram of a refrigeration cycle apparatus according to Embodiment 1 of the present invention.

Fig. 2 is a block diagram showing a control unit of the refrigeration cycle apparatus according to Embodiment 1 of the present invention.

Fig. 3 is a diagram showing an example of ethylene based fluorohydrocarbon used as refrigerant in the refrigeration cycle apparatus according to Embodiment 1 of the present invention.

Fig. 4 is a p-h diagram showing a change in state of refrigerant of a refrigeration cycle apparatus.

Fig. 5 is a diagram showing a relationship between an opening degree and a Cv value of the expansion device in the refrigeration cycle apparatus according to Embodiment 1 of the present invention.

Fig. 6 is a diagram showing a relationship between a change rate of an opening degree of an expansion device and a production amount of sludge due to polymerization in the refrigeration cycle apparatus according to Embodiment 1 of the present invention.

Fig. 7 is a configuration diagram of a refrigeration cycle apparatus according to a refrigeration cycle which is not part of the present invention.

Fig. 8 is a p-h diagram illustrating a normal operation state and a refrigerant-short operation state of the refrigeration cycle apparatus according to the refrigeration cycle of figure 7.

Fig. 9 is a diagram illustrating a method for integrating polymerization occurrence time in a refrigeration cycle apparatus according to Embodiment 2 of the present invention.

Fig. 10 is a diagram showing a relationship between integration of polymerization occurrence time and an amount of sludge due to polymerization in the refrigeration cycle apparatus according to Embodiment 2 of the present invention.

Description of Embodiments

Embodiment 1

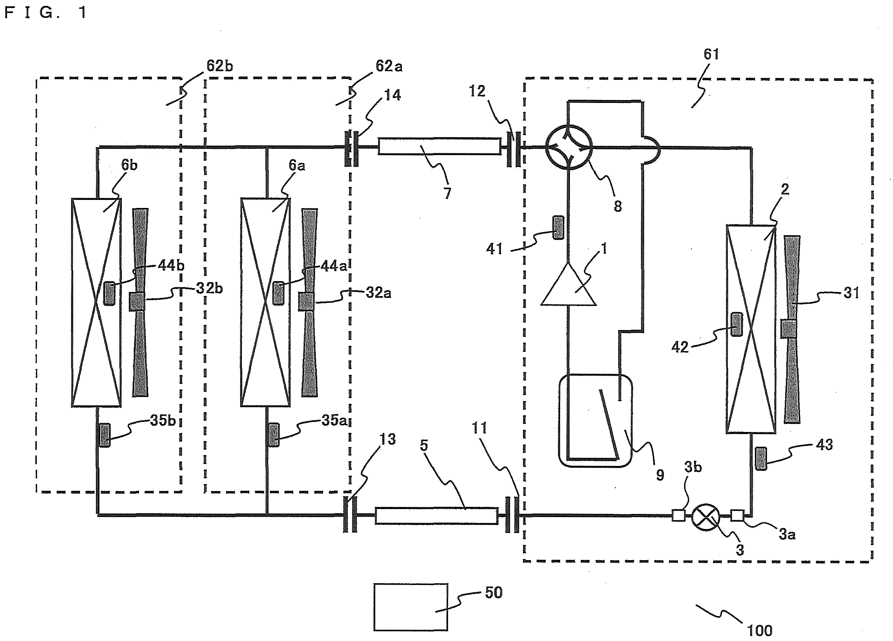

Embodiment 1 of the present invention will be described below with reference to the drawings. Fig. 1 is a configuration diagram of a refrigeration cycle apparatus according to Embodiment 1 of the present invention.

A refrigeration cycle apparatus 100 is an apparatus used for cooling and heating of an indoor or other air-conditioned space by performing a vapor compression type refrigeration cycle operation and is formed by connecting an outdoor unit 61 and an indoor unit 62 through a liquid pipe 5 and a gas pipe 7.

In this regard, in Embodiment 1, the liquid pipe 5 is removably connected to the outdoor unit 61 through a connection device 11 (joint or the like) and is removably connected to the indoor unit 62 through a connection device 13 (joint or the like). Also, the gas pipe 7 is removably connected to the outdoor unit 61 through a connection device 12 (joint or the like) and is removably connected to the indoor unit 62 through a connection device 14 (joint or the like).

Here, in the configuration of the refrigeration cycle apparatus 100 according to Embodiment 1, two indoor units 62 (indoor units 62a and 62b) are parallel connected, although the number of the indoor units 62 is arbitrarily chosen. Hereafter, in the case where configurations of the two, that is, an indoor unit 62 and another indoor unit 62, are distinguishably described, a distinction is made by adding a symbol "a" or "b" at the end of the reference numeral.

For example, the outdoor unit 61 disposed outdoors constitutes an outdoor side refrigerant circuit serving as part of a refrigerant circuit and includes a compressor 1, a flow switching device 8, which is a four-way valve or the like, an outdoor heat exchanger 2, an outdoor fan 31, an expansion device 3 with a controllable opening degree, an accumulator 9 serving as a refrigerant container, and the like.

The compressor 1 is a compressor, where a rotation speed (that is, operation capacity) can be changed by, for example, inverter control.

The flow switching device 8 is to switch a direction of a flow of the refrigerant. For details, in a cooling operation, the refrigerant flow of the flow switching device 8 is switched in such a way that the discharge side of the compressor 1 is connected to the gas side of the outdoor heat exchanger 2 and, in addition, the suction side of the compressor 1 is connected to the gas pipe 7 side (that is, gas side of an indoor heat exchanger 6(6a, 6b)) in order to allow the outdoor heat exchanger 2 to function as a condenser and allow the indoor heat exchanger 6 to function as an evaporator. Meanwhile, in a heating operation, the refrigerant flow of the flow switching device 8 is switched in such a way that the discharge side of the compressor 1 is connected to the gas pipe 7 side and, in addition, the suction side of the compressor 1 is connected to the gas side of the outdoor heat exchanger 2 in order to allow the indoor heat exchanger 6(6a, 6b) to function as a condenser and allow the outdoor heat exchanger 2 to function as an evaporator.

The outdoor heat exchanger 2 is, for example, a fin-and-tube type heat exchanger, the gas side thereof is connected to the flow switching device 8, and the liquid side thereof is connected to the liquid pipe 5 (that is, liquid side of the indoor heat exchanger 6). The outdoor heat exchanger 2 functions as a condenser in a cooling operation and functions as an evaporator in a heating operation.

The outdoor fan 31 is, for example, a fan, where a rotation speed can be changed (that is, a flow rate of air supplied to the outdoor heat exchanger 2 can be changed. Outdoor air is suctioned into the outdoor unit 61 by rotation of the outdoor fan 31, and the air heat-exchanged with the refrigerant in the outdoor heat exchanger 2 is discharged outdoors.

The expansion device 3 is, for example, an electronic expansion valve (LEV) and is arranged while being connected to the liquid side of the outdoor unit 61 in order to perform, for example, adjustment of flow rate of the refrigerant flowing in the refrigerant circuit.

The accumulator 9 is to reserve excess liquid refrigerant. Also, the accumulator 9 is to supply only a gas refrigerant to the suction side of the compressor 1 to prevent liquid back and is connected to the suction side of the compressor 1.

Meanwhile, the outdoor unit 61 is provided with various sensors. For details, a discharge temperature sensor 41 to detect discharge temperature Td, which is a temperature of the refrigerant discharged from the compressor 1, is disposed on the pipe on the discharge side of the compressor 1. Also, an outdoor unit gas side temperature sensor 42 to detect a temperature of refrigerant in a two-phase gas-liquid state (refrigerant temperature corresponding to a condensing temperature CT in the cooling operation or an evaporating temperature ET in the heating operation) is disposed in the outdoor heat exchanger 2. Also, an outdoor unit liquid side temperature sensor 43 to detect a temperature of refrigerant in a liquid state or a two-phase gas-liquid state is disposed on the liquid side of the outdoor heat exchanger 2.

Next, the configurations of the indoor units 62a and 62b will be described. In this regard, the indoor unit 62a and the indoor unit 62b have the same configuration, so that the configuration of the indoor unit 62a, as the representative, will be described here.

The indoor unit 62a constitutes an indoor side refrigerant circuit serving as part of the refrigerant circuit and includes an indoor fan 32a, an indoor heat exchanger 6a, and the like.

The indoor heat exchanger 6a is, for example, a fin-and-tube type heat exchanger, the gas side thereof is connected to the flow switching device 8 through the gas pipe 7, and the liquid side thereof is connected to the expansion device 3 through the liquid pipe 5. The indoor heat exchanger 6a functions as an evaporator in the cooling operation and functions as a condenser in the heating operation.

The indoor fan 32a is, for example, a fan, where a rotation speed can be changed (that is, a flow rate of air supplied to the indoor heat exchanger 6a can be changed. Indoor air is suctioned into the indoor unit 62a by rotation of the indoor heat exchanger 6a, and the indoor air heat-exchanged with the refrigerant in the indoor heat exchanger 6a is supplied to indoors as air-conditioning air.

Meanwhile, the indoor unit 62a is provided with various sensors. For details, an indoor unit liquid side temperature sensor 35a to detect a temperature of refrigerant in a liquid state or a two-phase gas-liquid state is disposed on the liquid side of the indoor heat exchanger 6a. Also, an indoor unit gas side temperature sensor 44a to detect a temperature of refrigerant in a two-phase gas-liquid state (refrigerant temperature corresponding to a condensing temperature CT in the heating operation or an evaporating temperature ET in the cooling operation) is disposed in the indoor heat exchanger 6a.

Control of the rotation speed of the compressor 1, flow switching of the flow switching device 8, control of the rotation speed of the outdoor fan 31, and control of the opening degree of the expansion device 3 in the outdoor unit 61 having the above-described configuration are performed by the control unit 50. Also, control of the rotation speed of the indoor fan 32 of the indoor unit 62 is performed by the control unit 50. The control unit 50 has a configuration as described below, for example.

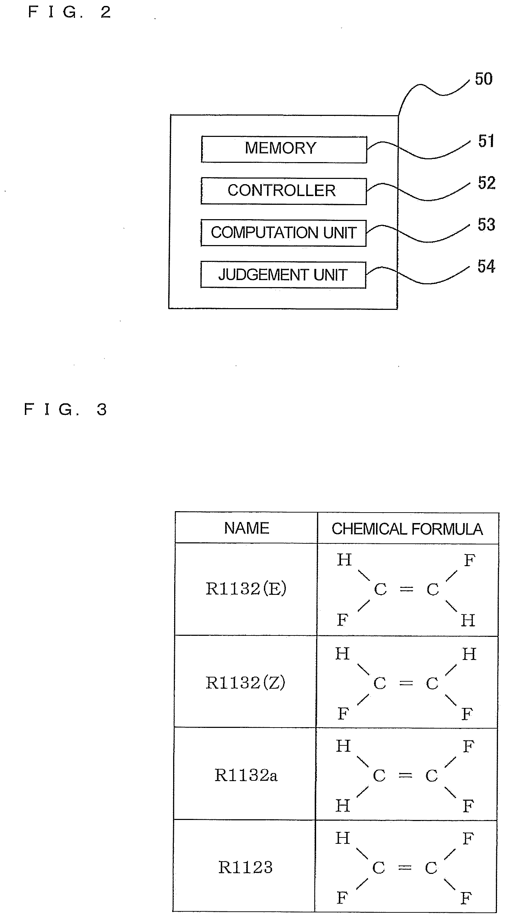

Fig. 2 is a block diagram showing the control unit of the refrigeration cycle apparatus according to Embodiment 1 of the present invention.

The control unit 50 includes a memory 51, a controller 52, a computation unit 53, and a judgement unit 54.

The memory 51 stores values detected by various sensors disposed in the outdoor unit 61 and the indoor unit 62. Also, the memory 51 stores the operation state of the refrigeration cycle apparatus 100 (control state of the controller 52), for example, the rotation speed of the compressor 1, the flow of the flow switching device 8, the rotation speed of the outdoor fan 31, the opening degree of the expansion device 3, and the rotation speed of the indoor fan 32. Also, the memory 51 stores data (mathematical expressions, tables, and the like) used for various computations by the computation unit 53 and computation results of the computation unit 53. Also, the memory 51 stores, for example, control target values serving as control criteria of the controller 52 and threshold values serving as judgement criteria of the judgement unit 54.

The controller 52 controls the rotation speed of the compressor 1, the rotation speed of the outdoor fan 31, the opening degree of the expansion device 3, the rotation speed of the indoor fan 32, and the like in such a way that the condensing temperature CT of the refrigerant, the evaporating temperature ET of the refrigerant, a degree of subcooling SC of the refrigerant, a degree of superheat SH of the refrigerant, a discharge temperature Td of the compressor 1, and the like become control target values. Also, the controller 52 switches the flow of the flow switching device 8 in such a way that an operation mode (heating operation, cooling operation) commanded by the user through, for example, a remote-control device is established.

The computation unit 53 computes the degree of subcooling SC, the degree of superheat SH, the clogging amount of the expansion device 3, and the like by using the detection values of various sensors disposed in the outdoor unit 61 and the indoor unit 62.

In this regard, in Embodiment 1, the degree of subcooling SC of the refrigerant and the degree of superheat SH of the refrigerant are determined as described below, for example. In the cooling operation, the degree of subcooling SC of the refrigerant is determined as a value obtained by subtracting a detection value of the outdoor unit liquid side temperature sensor 43 from a detection value of the outdoor unit gas side temperature sensor 42. In the heating operation, the degree of subcooling SC of the refrigerant is determined as a value obtained by subtracting detection values of the indoor unit liquid side temperature sensors 35a and 35b from the detection values of the indoor unit gas side temperature sensors 44a and 44b. Meanwhile, in the cooling operation, the degree of superheat SH of the refrigerant is determined as a value obtained by subtracting detection values of the indoor unit gas side temperature sensors 44a and 44b from a temperature Ts of the refrigerant suctioned by the compressor 1. In the heating operation, the degree of superheat SH of the refrigerant is determined as a value obtained by subtracting detection value of the outdoor unit gas side temperature sensor 42 from the temperature Ts of the refrigerant suctioned by the compressor 1.

In this regard, the temperature Ts of the refrigerant suctioned by the compressor 1 can be calculated from the discharge temperature Td detected by the discharge temperature sensor 41 on the basis of Formula (1) below, where the evaporating temperature ET of the refrigerant is converted to an evaporation pressure Ps, the condensing temperature CT is converted to a condensation pressure Pd, and a compression step of the compressor 1 is assumed to be a polytropic change with a polytropic index of n.

[Math. 1]

$$Ts = Td \times \left( \frac{Ps}{Pd} \right)^{\frac{n-1}{n}} \tag{1}$$

Here, Ts and Td represent temperatures [K], Ps and Pd represent pressures [MPa], and n represents a polytropic index [-]. The polytropic index may be a constant (for example, $n = 1.2$). However, the temperature Ts of the refrigerant suctioned by the compressor 1 can be estimated with high accuracy by specifying the polytropic index to be a function of Ps and Pd.

The judgement unit 54 compares detection values of various sensors disposed in the outdoor unit 61 and the indoor unit 62, computation results of the computation unit 53, and threshold values stored in the memory 51 and judges clogging of the expansion device 3, whether the amount of refrigerant circulating in the refrigerant circuit is decreased by a predetermined amount or more, and the like.

The thus configured refrigeration cycle apparatus 100 is applied to the cooling operation and the heating operation as described below.

In the cooling operation, the flow switching device 8 is switched to the state indicated by a broken line shown in Fig. 1, that is, the state in which the discharge side of the compressor 1 is connected to the gas side of the outdoor heat exchanger 2 and, in addition, the suction side of the compressor 1 is connected to the gas side of the indoor heat exchangers 6a and 6b. In the case where the compressor 1, the outdoor fan 31, and the indoor fans 32a and 32b are started in this refrigerant circuit state, a low-pressure gas refrigerant is suctioned and compressed by the compressor 1 to become a high-pressure gas refrigerant. Thereafter, the high-pressure gas refrigerant is sent to the outdoor heat exchanger 2 through the flow switching device 8 and is condensed by heat exchange with the outdoor air supplied by the outdoor fan 31 so as to become a high-pressure liquid refrigerant. Subsequently, the resulting high-pressure liquid refrigerant is decompressed by the expansion device 3 to become a low-temperature low-pressure two-phase gas-liquid refrigerant, is sent to the indoor units 62a and 62b through the liquid pipe 5, and is evaporated by heat exchange with the indoor air in the indoor heat exchangers 6a and 6b to become a low-pressure gas refrigerant. The resulting low-pressure gas refrigerant is sent to the outdoor unit 61 through the gas pipe 7 and is suctioned again by the compressor 1 through the flow switching device 8.

In the heating operation, the flow switching device 8 is switched to the state indicated by a solid line shown in Fig. 1, that is, the state in which the discharge side of the compressor 1 is connected to the gas side of the indoor heat exchangers 6a and 6b and, in addition, the suction side of the compressor 1 is connected to the gas side of the outdoor heat exchanger 2. In the case where the compressor 1, the outdoor fan 31, and the indoor fans 32a and 32b are started in this refrigerant circuit state, a low-pressure gas refrigerant is suctioned and compressed by the compressor 1 to become a high-pressure gas refrigerant and is sent to the indoor units 62a and 62b through the flow switching device 8 and the gas pipe 7. Subsequently, the high-pressure gas refrigerant sent to the indoor units 62a and 62b is condensed by heat exchange with the indoor air in the indoor heat exchangers 6a and 6b to become a high-pressure liquid refrigerant. The resulting high-pressure liquid refrigerant is sent through the liquid pipe 5 and is decompressed by the expansion device 3 to become a low-pressure two-phase gas-liquid refrigerant. The refrigerant in the low-pressure two-phase gas-liquid state is sent into the outdoor heat exchanger 2 of the outdoor unit 61. Then, the refrigerant in the low-pressure two-phase gas-liquid state sent into the outdoor heat exchanger 2 is condensed by heat exchange with the outdoor air supplied by the outdoor fan 31 to become a low-pressure gas refrigerant. The resulting low-pressure gas refrigerant is suctioned again by the compressor 1 through the flow switching device 8.

Here, in Embodiment 1, an ethylene based fluorohydrocarbon or a mixture containing the ethylene based fluorohydrocarbon, serving as a low-boiling point refrigerant as with R410A, is used for the refrigerant circulated in the refrigerant circuit including the compressor 1, the outdoor heat exchanger 2, the expansion device 3, the indoor heat exchangers 6a and 6b, and the like.

Fig. 3 is a diagram showing an example of ethylene based fluorohydrocarbon used as the refrigerant in the refrigeration cycle apparatus 100 according to Embodiment 1. In Embodiment 1, for example, trans-1,2-difluoroethylene (R1132(E)) described in an uppermost column shown in Fig. 3 is used as the refrigerant, although ethylene based fluorohydrocarbons described in other columns shown in Fig. 3 or other ethylene based fluorohydrocarbons can also be used. Specifically, besides (R1132(E)), for example, those containing any one of cis-1,2-difluoroethylene (R1132(Z)), 1,1-difluoroethylene (R1132a), 1,1,2-trifluoroethylene (R1123), fluoroethylene (R1141), and these compositions in which one of fluorine (F) is substituted with other halogen element (Cl, Br, I, or At) can be used.

Such ethylene based fluorohydrocarbons have high reactivity and are chemically unstable, so that decomposition and polymerization occur easily. Consequently, in the case where the ethylene based fluorohydrocarbon is used as the refrigerant, it is feared that clogging of the expansion device 3 occurs because of products generated through polymerization (hereafter may be referred to as sludge due to polymerization).

Therefore, since an ethylene based fluorohydrocarbon is used as the refrigerant, a configuration to detect clogging of the expansion device 3 is required. However, if previously known technology to detect clogging of an expansion device is adopted for the refrigeration cycle apparatus 100 according to Embodiment 1, the following problems occur.

For details, if clogging of the expansion device occurs, the refrigeration cycle apparatus comes into the state in which the amount of the refrigerant circulating in the refrigerant circuit is decreased. Also, in the case where leakage of the refrigerant from the refrigerant circuit occurs, the refrigeration cycle apparatus comes into the state in which the amount of the refrigerant circulating in the refrigerant circuit is decreased. Here, examples of sludge generated in the previously known refrigeration cycle apparatus include oils not dissolving into refrigerant, such as, cutting oil and rust-inhibiting oil, adhering to pipes and compressor components constituting the refrigeration cycle apparatus in machining of them and refrigerating machine oil and cutting oil deteriorated because of high temperatures in the case where contact of metals occur in the sliding unit of the compressor (hereafter sludge other than such sludge due to polymerization is referred to as common sludge). Such common sludge does not cause decrease in the amount of the refrigerant in the generation process thereof. Consequently, in the previously known refrigeration cycle apparatus, whether the cause of decrease in the amount of circulation of refrigerant is clogging of an expansion device with sludge or a leakage of refrigerant from the refrigerant circuit is judged.

On the other hand, because the ethylene based fluorohydrocarbon is used as the refrigerant, the amount of refrigerant in itself decreases because sludge is generated through polymerization. In addition, the previously known technology to detect clogging of the expansion device cannot identify the type of sludge clogged in the expansion device. Consequently, in the case where clogging of the expansion device 3 occurs in the refrigeration cycle apparatus 100, and the operator performs repair works of the refrigeration cycle apparatus 100, the operator cannot determine whether a refrigerant filling operation is required or not besides exchange of the expansion device 3, and repair works take much time.

Then, in the refrigeration cycle apparatus 100 according to Embodiment 1, a strainer (filter) is disposed on the upstream side of the expansion device 3, that is, between the condenser and the expansion device 3 to detect the clogging amount of the expansion device 3. Consequently, in the refrigeration cycle apparatus 100 according to Embodiment 1, clogging of the expansion device 3 ascribed to sludge due to polymerization can be detected and, thereby, repair works can be performed promptly.

For details, the refrigeration cycle apparatus 100 according to Embodiment 1 can perform both the cooling operation and the heating operation. Therefore, as shown in Fig. 1, in the refrigeration cycle apparatus 100, a strainer 3a is disposed at the position on the upstream side of the expansion device 3 in the cooling operation and a strainer 3b is disposed at the position on the upstream side of the expansion device 3 in the heating operation. Consequently, sludge due to polymerization and common sludge sent into the strainers 3a and 3b are caught by the strainers 3a and 3b.

Here, the amount of common sludge does not increase between the condenser (the outdoor heat exchanger 2 in the heating operation and the indoor heat exchangers 6a and 6b in the cooling operation) and the expansion device 3. On the other hand, polymerization of the ethylene based fluorohydrocarbon occurs between the condenser and the expansion device 3 as well, so that sludge due to polymerization increases between the condenser and the expansion device 3. Consequently, it is made clear by disposing the strainers 3a and 3b that most of substances causing clogging of the expansion device 3, that is, substances causing an increase in the clogging amount of the expansion device 3, are sludge due to polymerization. That is, the strainers 3a and 3b correspond to the polymerization amount estimation device (device used for estimating an amount made up by a product generated through polymerization in substances causing clogging of the expansion device 3) of the present invention.

Then, the refrigeration cycle apparatus 100 according to Embodiment 1 detects the clogging amount of the expansion device 3 by comparing the Cv value in theory (hereafter referred to as theoretical Cv value) of the expansion device 3 and the Cv value of the expansion device 3 computed from the operation state of the refrigeration cycle apparatus 100 (that is, refrigerant circuit).

In this regard, the Cv value is defined as "a numerical value (dimensionless) represented by a flow rate of water, in terms of US gal/min (1 US gal = 3.785 L), flowing in a valve at a specific opening degree, where the temperature of the water is 60 degrees F (about 15.5 degrees C) and a pressure difference is 1 lb/in$^2$ [6.895 kPa]). This is one of simple methods generally used in selection of a valve, where a Cv value is determined from fluid specifications and is compared with Cv values shown by valve makers, so as to determine the type of valve and the diameter.

To begin with, a method for computing a Cv value of the expansion device 3 from the operation state of the refrigeration cycle apparatus 100 (that is, refrigerant circuit) will be described.

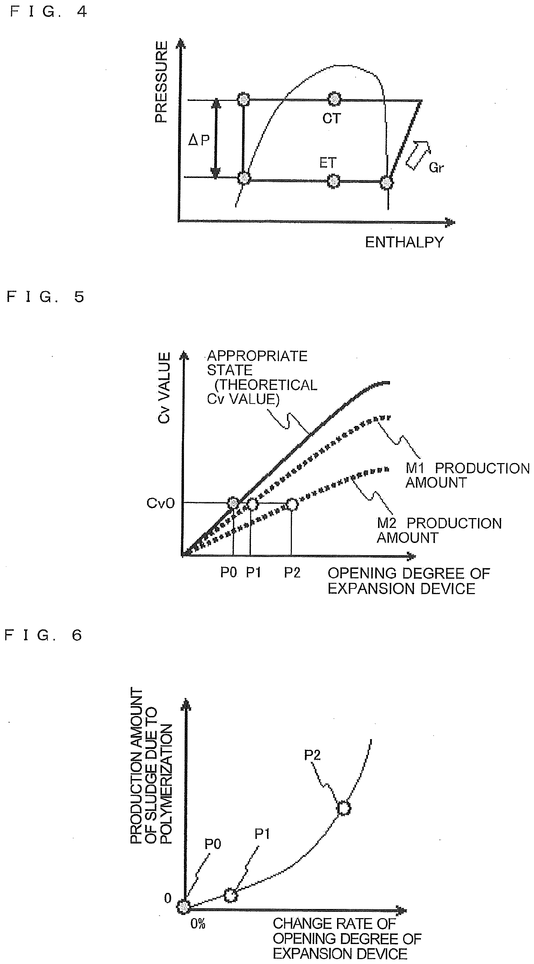

Fig. 4 is a p-h diagram showing a change in state of refrigerant of a refrigeration cycle apparatus. In Fig. 4, the horizontal axis indicates the enthalpy [kJ/kg] of the refrigerant and the vertical axis indicates the pressure [MPa] of the refrigerant.

The relationship between a pressure difference indicated by ΔP shown in Fig. 4 between before and after the expansion device 3 and the flow rate of the refrigerant flowing in the expansion device 3 is represented by Formula (2) below, where the Cv value is a dimensionless indicator.

[Math. 2]

$$C_V = M \sqrt{\frac{G}{\Delta P}} \qquad (2)$$

Here, M represents a flow rate [l/min] of the refrigerant flowing in the expansion device 3, G represents a specific gravity of the refrigerant, and ΔP represents a pressure difference [Pa] between before and after the expansion device 3.

In the case where the flow rate M of the refrigerant flowing in the expansion device 3, the specific gravity G of the refrigerant, and the pressure difference ΔP between before and after the expansion device 3 are determined, the Cv value is determined on the basis of Formula (2).

Here, the specific gravity G of the refrigerant is a value determined by calculating the density of the refrigerant if the refrigerant flowing in the refrigerant circuit of the refrigeration cycle apparatus 100 is decided. Therefore, Formula (2) is transformed to Formula (3) in SI units, where the amount of circulation of refrigerant in the refrigerant circuit is specified to be Gr [kg/s] and the density of refrigerant is specified to be ρl [kg/m$^3$].

[Math. 3]

$$C_V = \frac{G_r \times 3600}{86.5 \times \sqrt{\Delta P \times \rho_l}} \qquad (3)$$

The amount of circulation of refrigerant Gr [kg/s] can be computed on the basis of Formula (4) from the displacement Vst [m$^3$] of the compressor 1, the frequency F [Hz] (rotation speed) of the compressor 1, and the density ρs [kg/m$^3$] of the refrigerant suctioned by the compressor 1.

[Math. 4]

$$G_r = V_{st} \times F \times \rho_s \qquad (4)$$

In this regard, the density ρs of the refrigerant suctioned by the compressor 1 can be estimated from the evaporating temperature ET on the assumption that the compressor 1 suctions the refrigerant as a saturated gas.

According to Formula (3), if the amount of circulation of refrigerant Gr, the pressure difference ΔP between before and after the expansion device 3, and the density ρl of refrigerant at an inlet of the expansion device 3 can be measured, the Cv value of the expansion device 3 computed from the operation state of the refrigeration cycle apparatus 100 (that is, refrigerant circuit) can be obtained.

As for the pressure difference ΔP between before and after the expansion device 3, the pressures at the inlet and the outlet of the expansion device 3 may be directly measured. However, in Embodiment 1, the condensing temperature CT is converted to a condensing pressure, the evaporating temperature ET is converted to an evaporating pressure, and a pressure difference between them is specified to be the pressure difference ΔP between before and after the expansion device 3. Meanwhile, the density ρl of refrigerant at an inlet of the expansion device 3 can be determined from the refrigerant temperature at the outlet of the condenser (detection temperature of the outdoor unit liquid side temperature sensor 43 in the cooling operation, detection temperatures of the indoor unit liquid side temperature sensors 35a and 35b in the heating operation).

In this regard, in computation of the Cv value of the expansion device 3 from the operation state of the refrigeration cycle apparatus 100, it is preferable that computation be performed by setting a sludge adhesion operation mode and fixing the operating states of the individual actuators of the refrigeration cycle apparatus 100, for example, the rotation speed of the compressor 1, the rotation speed of the outdoor fan 31, the rotation speeds of the indoor fans 32a and 32b, and the opening degree of the expansion device 3. Consequently, the flow rate of the refrigerant circulating in the refrigerant circuit can be stabilized and the accuracy of the Cv value of the expansion device 3 computed from the operation state of the refrigeration cycle apparatus 100 is improved.

Next, a method for determining the theoretical Cv value of the expansion device 3 will be described.

Fig. 5 is a diagram showing a relationship between the opening degree of the expansion device and the Cv value in the refrigeration cycle apparatus according to Embodiment 1 of the present invention. In this regard, in Fig. 5, the horizontal axis indicates the opening degree of the expansion device 3 and the vertical axis indicates the Cv value.

As for the expansion device 3 serving as an expansion valve, the theoretical Cv values are determined in accordance with the opening degrees in advance. Also, the opening degree of the expansion device 3 is controlled by controlling a driving unit, for example, a motor, with the controller 52. Consequently, in the case where a Cv value table (Fig. 5) showing the relationship between the opening degree of the expansion device 3 and the theoretical Cv value is stored in the memory 51, the computation unit 53 can compute the theoretical Cv value at a predetermined opening degree of the expansion device 3 from the Cv value table and the amount of control (the number of pulses) of the driving unit with the controller 52.

Here, the Cv value increases as a flow diameter increases and the value decreases as the flow is narrowed. Therefore, as sludge due to polymerization is clogged into the expansion device 3, the Cv value of the expansion device 3 computed from the operation state of the refrigeration cycle apparatus 100 decreases.

That is, as shown in Fig. 5, in the state in which sludge due to polymerization is not clogged into the expansion device 3 ("appropriate state" shown in Fig. 5), the Cv value of the expansion device 3 computed from the operation state of the refrigeration cycle apparatus 100 agrees with the theoretical Cv value. However, as sludge due to polymerization is clogged into the expansion device 3 (as the production amount of sludge due to polymerization increases to M1 and further M2), the opening degree of the expansion device 3 increases from P0 to P2 in the case where the Cv value of the expansion device 3 computed from the operation state of the refrigeration cycle apparatus 100 is specified to be Cv0, which is the same value as the theoretical Cv value. That is, as sludge due to polymerization is clogged into the expansion device 3, the change rate of opening degree of the expansion device 3 relative to the theoretical opening degree increases from P0 to P2 in the case where the Cv value of the expansion device 3 computed from the operation state of the refrigeration cycle apparatus 100 is made to be Cv0, which is the same value as the theoretical Cv value. Therefore, presence or absence of clogging of the expansion device 3 (that is, clogging amount) can be detected by computing the Cv value of the expansion device 3 computed from the operation state of the refrigeration cycle apparatus 100 successively and comparing the Cv value of the expansion device 3 computed from the operation state of the refrigeration cycle apparatus 100 and the theoretical Cv value.

Here, the sensors to measure the condensing temperature CT and the evaporating temperature ET, the memory 51, and the computation unit 53 correspond to the clogging amount detection device of the present invention.

In this regard, as for the expansion device 3, there are variations between individuals and even when the expansion device 3 is not clogged, the Cv value of the expansion device 3 computed from the operation state of the refrigeration cycle apparatus 100 (Cv value determined on the basis of Formula (3)) does not always agree with the theoretical Cv value. In addition, a difference between the Cv value of the expansion device 3 computed from the operation state of the refrigeration cycle apparatus 100 and the theoretical Cv value may occur by a pressure loss and a difference in the height of the pipes of the refrigerant circuit. Therefore, the clogging amount of the expansion device 3 can be detected with high accuracy by calculating the Cv value at the time of initial installation (in the state in which the expansion device 3 is not clogged) on the basis of Formula (3), allowing the memory 51 to store a difference between the resulting Cv value and the theoretical Cv value as a correction amount, and correcting the Cv value computed on the basis of Formula (3) with the correction value.

As described above, in the refrigeration cycle apparatus 100 according to Embodiment 1, the clogging amount of the expansion device 3 can be detected with the clogging amount detection device (memory 51 and computation unit 53). Also, it is made clear by disposing the strainers 3a and 3b that most of substances causing clogging of the expansion device 3, that is, substances causing an increase in the clogging amount of the expansion device 3, are sludge due to polymerization. Consequently, as for the refrigeration cycle apparatus 100 according to Embodiment 1, in the case where the clogging amount of the expansion device 3 reaches a predetermined amount or more and exchange of the expansion device 3 is required, it can be specified that the cause of clogging of the expansion device 3 is ascribed to sludge due to polymerization. Therefore, repair works of the refrigeration cycle apparatus 100 can be performed promptly.

In addition, the memory 51 may be allowed to store the threshold value of the clogging amount of the expansion device 3 and the judgement unit 54 may be allowed to judge whether the clogging amount of the expansion device 3 reaches the threshold value or more. In this manner, the user and the like can be stimulated to exchange the expansion device 3 before the refrigeration cycle apparatus 100 becomes out of control.

Also, the production amount of sludge due to polymerization may be computed on the basis of the clogging amount of the expansion device 3.

Fig. 6 is a diagram showing a relationship between a change rate of the opening degree of the expansion device and a production amount of sludge due to polymerization in the refrigeration cycle apparatus according to Embodiment 1 of the present invention. In this regard, in Fig. 6, the horizontal axis indicates a change rate of the opening degree of the expansion device 3 (that is, the clogging amount of the expansion device 3) and the vertical axis indicates the production amount of sludge due to polymerization.

As described above, it is made clear by disposing the strainers 3a and 3b in the refrigeration cycle apparatus 100 according to Embodiment 1 that most of substances causing clogging of the expansion device 3, that is, substances causing an increase in the clogging amount of the expansion device 3, are sludge due to polymerization. Consequently, in the case where a production amount table (Fig. 6) showing the relationship between the clogging amount of the expansion device 3 and the sludge due to polymerization is stored in the memory 51, the computation unit 53 can compute the production amount of sludge due to polymerization on the basis of the clogging amount of the expansion device 3 and the production amount table. Here, as the production amount of sludge due to polymerization increases, the refrigerant in the refrigerant circuit decreases. Therefore, if the production amount of sludge is known, the amount of decrease in the refrigerant in the refrigerant circuit can be grasped, so that in the case where repair works (exchange of the expansion device 3 and the like) of the refrigeration cycle apparatus 100 are performed, the amount of refrigerant to be filled into the refrigerant circuit is grasped easily, and repair works of the refrigeration cycle apparatus 100 can be performed more promptly.

In this regard, conversion of the production amount of sludge due to polymerization to the amount of decrease in the refrigerant can be performed by the computation unit 53 by allowing the memory 51 to store a table showing the relationship between the production amount of sludge and the amount of decrease in the refrigerant.

Meanwhile, the configuration used for detecting the clogging amount of the expansion device 3 in Embodiment 1 is not a configuration peculiar to the expansion device 3. Generally in elements in which clogging occurs, such as, the outdoor heat exchanger 2 and the indoor heat exchangers 6a and 6b, it is possible to use for detection of the clogging amount of the element concerned. That is, as for an element in which clogging occurs, the amount of circulation of refrigerant Gr, the pressure difference $\Delta P$ between before and after, and the refrigerant density $\rho l$ are determined, the Cv value of the element concerned is computed on the basis of Formula (3), and the resulting Cv value is compared with the theoretical Cv value of the element concerned, so that the clogging amount of the element concerned can be detected.

Also, clogging elimination control may be performed, where the judgement unit 54 is allowed to judge whether the clogging amount of the expansion device 3 is more than or equal to a predetermined amount (more than or equal to the threshold value stored in the memory 51), if the clogging amount of the expansion device 3 is more than or equal to the predetermined amount, the opening degree of the expansion device 3 is increased as compared with that in the normal operation (for example, a maximum opening degree is employed), and clogging is washed away by the force of the refrigerant flowing in the expansion device 3. Consequently, the expansion device 3 can be eliminated.

In Embodiment 1, the polymerization amount estimation device is formed from strainers 3a and 3b, although not limited to this. The polymerization amount estimation device may be formed as described below. In this regard, in the following, items not specifically described are the same as those in Embodiment 1, and the same functions and configurations are described by using the same reference numerals.

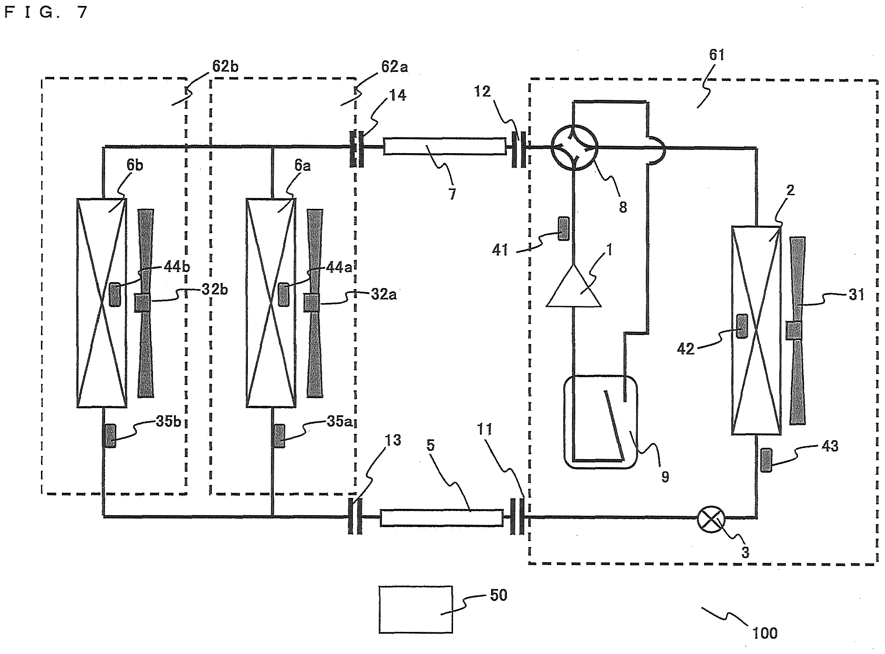

Fig. 7 is a configuration diagram of a refrigeration cycle apparatus which is not part of the present invention. The refrigeration cycle apparatus 100 has a configuration in which the strainers 3a and 3b serving as the polymerization amount estimation device are not disposed as compared with the configuration of the refrigeration cycle apparatus 100 shown in Embodiment 1. Consequently, the refrigeration cycle apparatus 100 of figure 7 has the following configuration, where a decrease in the amount of refrigerant circulating in the refrigerant circuit is detected and whether the cause of clogging of the expansion device 3 is ascribed to sludge due to polymerization is judged on the basis of the clogging of the expansion device 3 and the decrease in the amount of refrigerant circulating in the refrigerant circuit.

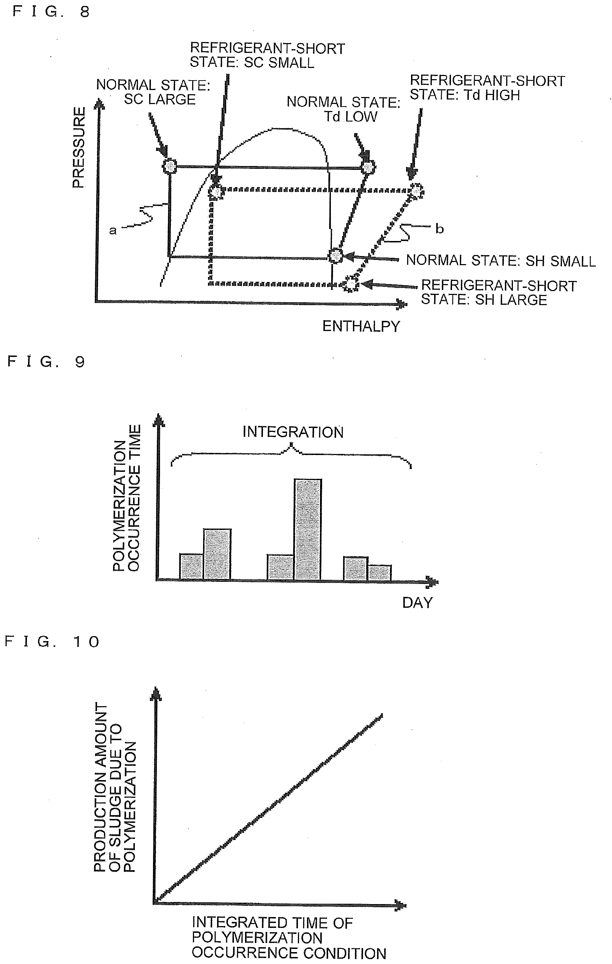

Fig. 8 is a p-h diagram illustrating a normal operation state and a refrigerant-short operation state of the refrigeration cycle apparatus according to figure 7. In Fig. 8, the horizontal axis indicates the enthalpy [kJ/kg] of the refrigerant and the vertical axis indicates the pressure [MPa] of the refrigerant.

In the state in which the amount of refrigerant circulating in the refrigerant circuit is not decreased ("normal state" shown in Fig. 8), the refrigeration cycle state of the refrigerant circulating in the refrigerant circuit is a state indicated by "a" shown in Fig. 8. On the other hand, if the amount of refrigerant circulating in the refrigerant circuit decreases ("refrigerant-short state" shown in Fig. 8), the refrigeration cycle state of the refrigerant circulating in the refrigerant circuit is a state indicated by "b" shown in Fig. 8.

For details, in the refrigeration cycle apparatus 100, the opening degree of the expansion device 3 is controlled by the controller 52 in such a way that the degree of subcooling SC of the refrigerant becomes constant. Also, the rotation speed of the compressor 1 is controlled by the controller 52 in such a way that the air-conditioning capacity becomes constant (for example, the evaporating temperature ET, the condensing temperature CT, and the degree of superheat SH become predetermined values).

At this time, if the amount of refrigerant circulating in the refrigerant circuit decreases, the amount of the refrigerant in the condenser becomes insufficient, and the degree of subcooling SC at the outlet of the condenser is reduced. Therefore, the controller 52 reduces the opening degree of the expansion device 3 to increase the degree of subcooling SC. Consequently, the amount of refrigerant supplied to the evaporator decreases, the degree of superheat SH at the outlet of the evaporator increases in due time, and the capacity of the evaporator is reduced. Then, the rotation speed of the compressor 1 is increased in such a way that the air-conditioning capacity becomes constant. If the rotation speed of the compressor 1 is increased, the pressure loss in the refrigerant circuit is increased, and the pressure of the refrigerant suctioned by the compressor 1 decreases easily. As a result, the discharge temperature Td of the compressor 1 increases. If the amount of refrigerant circulating in the refrigerant circuit decreases, the discharge temperature Td reaches the upper limit value specified for the unit, the opening degree of the expansion valve is increased to lower the discharge temperature Td, so that the degree of subcooling SC is further reduced. Then, the operation is repeated as the amount of refrigerant circulating in the refrigerant circuit decreases. That is, as the amount of refrigerant circulating in the refrigerant circuit decreases, the degree of subcooling SC is reduced gradually, the degree of superheat SH increases, and the discharge temperature Td increases as compared with the state in which the amount of refrigerant circulating in the refrigerant circuit does not decrease.

Therefore, in this case, at least one of the lower limit value (threshold value) of the degree of subcooling SC, the upper limit value (threshold value) of the degree of superheat SH, and the upper limit value (threshold value) of the discharge temperature Td is stored in the memory 51. Then, in the case where at least one of the degree of subcooling SC, the degree of superheat SH, and the discharge temperature Td exceeds the respective threshold values stored in the memory 51, the judgement unit 54 judges that the amount of refrigerant circulating in the refrigerant circuit decreases.

Here, since the ethylene based fluorohydrocarbon is used as the refrigerant, as described above, sludge is generated through polymerization and, thereby, the amount of the refrigerant in itself decreases. Consequently, when the judgement unit 54 judges that the amount of refrigerant circulating in the refrigerant circuit decreases in the case where clogging of the expansion device 3 is detected by the same configuration as with Embodiment 1 (in the case where the clogging amount is more than or equal to a predetermined value), it is possible to judge that the cause of clogging of the expansion device 3 is ascribed to sludge due to polymerization. Also, in the case where clogging of the expansion device 3 is detected in the state in which the amount of refrigerant circulating in the refrigerant circuit does not decrease, it is possible to judge that the cause of clogging of the expansion device 3 is ascribed to common sludge. Also, when the judgement unit 54 judges that the amount of refrigerant circulating in the refrigerant circuit decreases in the case where clogging does not occur in the expansion device 3 (in the case where the clogging amount is smaller than a predetermined value), it is possible to judge that the refrigerant leaks from the refrigerant circuit.

That is, the indoor unit liquid side temperature sensors 35a and 35b, the discharge temperature sensor 41, the outdoor unit gas side temperature sensor 42, the outdoor unit liquid side temperature sensor 43, the indoor unit gas side temperature sensors 44a and 44b, the memory 51, and the computation unit 53 required for detecting the degree of subcooling SC, the degree of superheat SH, and the discharge temperature Td correspond to a refrigerant state detection unit. Meanwhile, here, the refrigerant state detection unit, the memory 51, and the judgement unit 54 correspond to the polymerization amount estimation device similar to that of the present invention.

As described above, in the refrigeration cycle apparatus 100 according to figure 7, clogging of the expansion device 3 ascribed to sludge due to polymerization can be detected as with Embodiment 1. Consequently, repair works of the refrigeration cycle apparatus 100 can be performed promptly.

Also, in the refrigeration cycle apparatus 100 according to figure 7, it is possible to judge whether the cause of decrease in the amount of refrigerant circulating in the refrigerant circuit is ascribed to the polymerization of the refrigerant or is leakage of the refrigerant from the refrigerant circuit. The ethylene based fluorohydrocarbon is a combustible substance and, therefore, in the case where the cause of decrease in the amount of refrigerant circulating in the refrigerant circuit is not clear, the refrigeration cycle apparatus 100 has to be stopped immediately in consideration of the possibility of leakage of the refrigerant from the refrigerant circuit. However, as for the refrigeration cycle apparatus 100 according to figure 7, in the case where the cause of decrease in the amount of refrigerant circulating in the refrigerant circuit is ascribed to polymerization of the refrigerant, the operation of the refrigeration cycle apparatus 100 can be continued unless the amount of decrease of the refrigerant is an amount which hinders the operation of the refrigeration cycle apparatus 100. Consequently, the refrigeration cycle apparatus 100 according to figure 7 can also obtain an effect of improving the operability. In this regard, the judgment whether the operation of the refrigeration cycle apparatus 100 is continued or not may be performed by the judgement unit 54 on the basis of comparison between the amount of decrease of the refrigerant and the threshold value stored in the memory 51.

Meanwhile, both the polymerization amount estimation device described in figure 7 and the polymerization amount estimation device described in Embodiment 1 may be mounted on the refrigeration cycle apparatus 100, as a matter of course.

Embodiment 2

A polymerization amount estimation device described below may be adopted in place of the polymerization amount estimation devices described in Embodiment 1 and figure 7 or in combination with the polymerization amount estimation devices described in Embodiment 1 and figure 7. In this regard, in Embodiment 2, items not specifically described are the same as those in Embodiment 1 and figure 7, and the same functions and configurations are described by using the same reference numerals.

In general, polymerization of the ethylene based fluorohydrocarbon tends to occur at high temperatures and high pressures. That is, the lower limit temperature of occurrence of polymerization and the lower limit pressure of occurrence of polymerization are determined on a type of the ethylene based fluorohydrocarbon basis. Therefore, in Embodiment 2, the operation time under the condition at which polymerization of the refrigerant occurs or tends to occur is stored and the amount of generation of products due to polymerization is estimated by integrating the operation time.

Fig. 9 is a diagram illustrating a method for integrating polymerization occurrence time in a refrigeration cycle apparatus according to Embodiment 2 of the present invention. Also, Fig. 10 is a diagram showing a relationship between integration of polymerization occurrence time and a production amount of sludge due to polymerization in the refrigeration cycle apparatus according to Embodiment 2 of the present invention.

In the refrigeration cycle apparatus 100 according to Embodiment 2, operation time under the condition at which polymerization tends to occur ("polymerization occurrence time" shown in Fig. 9) is stored in the memory 51 during operation. Here, the operation time under the condition at which polymerization tends to occur refers to, for example, a period of time in which the refrigeration cycle apparatus 100 is operated under the condition of the refrigerant temperature being higher than or equal to the predetermined temperature stored in the memory 51 (operation time at polymerization occurrence temperature). Also, the operation time under the condition at which polymerization tends to occur refers to, for example, a period of time in which the refrigeration cycle apparatus 100 is operated under the condition of the refrigerant pressure being more than or equal to the predetermined pressure stored in the memory 51 (operation time at polymerization occurrence pressure).

Meanwhile, the computation unit 53 in the refrigeration cycle apparatus 100 according to Embodiment 2 integrates the operation time under the condition at which polymerization tends to occur. Then, the computation unit 53 in the refrigeration cycle apparatus 100 according to Embodiment 2 estimates the production amount of sludge due to polymerization from the integrated value of the operation time under the condition at which polymerization tends to occur on the basis of the table (Fig. 10) to estimate the production amount of sludge due to polymerization. In this regard, the table is stored in the memory 51.

As described above, in the refrigeration cycle apparatus 100 according to Embodiment 2, in the case where the clogging amount of the expansion device 3 is detected by the same configuration as with Embodiment 1, if the production amount of sludge due to polymerization is more than or equal to the predetermined threshold value (stored in the memory 51), it is possible to judge that the cause of clogging of the expansion device 3 is ascribed to sludge due to polymerization. Also, in the case where the clogging amount of the expansion device 3 is detected by the same configuration as with Embodiment 1, if the production amount of sludge due to polymerization is less than the predetermined threshold value (stored in the memory 51), it is possible to judge that the cause of clogging of the expansion device 3 is ascribed to common sludge. In this regard, the operator may perform this judgment or the judgment unit 54 may be allowed to judge.

Also, the polymerization amount estimation device described in Embodiment 2 (memory 51 and computation unit) may be used in combination with the polymerization amount estimation devices described in Embodiment 1 and in relation to figure 7 and, thereby, an effect of improving the detection accuracy of the production amount of sludge due to polymerization can be obtained.

Reference Signs List

1 compressor 2 outdoor heat exchanger 3 expansion device 3a, 3b strainer 5 liquid pipe 6(6a, 6b) indoor heat exchanger 7 gas pipe 8 flow switching device 9 accumulator 11 connection device 12 connection device 13 connection device 14 connection device 31 outdoor fan 32(32a, 32b) indoor fan 35(35a, 35b) indoor unit liquid side temperature sensor 41 discharge temperature sensor 42 outdoor unit gas side temperature sensor 43 outdoor unit liquid side temperature sensor 44(44a, 44b) indoor unit gas side temperature sensor 61 outdoor unit 62(62a, 62b) indoor unit 50 control unit 51 memory 52 controller 53 computation unit 54 judgement unit 100 refrigeration cycle apparatus

**Claims**

1.  A refrigeration cycle apparatus comprising:

    a refrigerant circuit including at least a compressor (1), a condenser, an expansion device (3), and an evaporator , **characterised by**
    using an ethylene based fluorohydrocarbon or a mixture containing the ethylene based fluorohydrocarbon as refrigerant and comprising :

    a controller (52) configured to control a rotation speed of the compressor (1) and an opening degree of the expansion device (3);
    a clogging amount detection device configured to detect a clogging amount of the expansion device (3); and
    a polymerization amount estimation device configured to determine an amount of a product generated through polymerization of the refrigerant,

    wherein the clogging amount detection device includes
    a memory (51) storing a table or a mathematical formula of Cv value showing a relationship between an opening degree of the expansion device (3) and a theoretical Cv value, and
    a computation unit (53) configured to compute an actual Cv value of the expansion device (3) computed from an operation state of the refrigerant circuit, compute the theoretical Cv value of the expansion device (3) in the operation state based on the table or the mathematical formula of Cv value, and compute the clogging amount of the expansion device (3) based on the actual Cv value and theoretical Cv value,
    wherein the Cv value is defined by

    $$C_V = M\sqrt{\frac{G}{\Delta P}}$$

    wherein M represents a flow rate of the refrigerant flowing in the expansion device (3), G represents a specific gravity of the refrigerant, and $\Delta P$ represents a pressure difference between before and after the expansion device (3),
    wherein the polymerization amount estimation device includes the memory (51) configured to store a table or a mathematical formula for estimating the production amount of the product from a polymerization occurrence temperature operation time corresponding to an operation time of the refrigerant circuit under the condition of the refrigerant being at a predetermined temperature or higher and an integrated value of the polymerization occurrence temperature operation time, and
    the computation unit (53) configured to compute the integrated value of the polymerization occurrence temperature operation time and, compute the production amount of the product from the integrated value of the polymerization occurrence temperature operation time based on the table or the mathematical formula for estimating the production amount of the product.

2.  A refrigeration cycle apparatus comprising:

    a refrigerant circuit including at least a compressor (1), a condenser, an expansion device (3), and an evaporator, **characterised by**
    using an ethylene based fluorohydrocarbon or a mixture containing the ethylene based fluorohydrocarbon as refrigerant and comprising :

    a controller (52) configured to control a rotation speed of the compressor (1) and an opening degree of the expansion device (3);
    a clogging amount detection device configured to detect a clogging amount of the expansion device (3);
    a polymerization amount estimation device configured to determine an amount of a product generated through polymerization of the refrigerant;
    a memory (51) storing a table or a mathematical formula of production amount showing a relationship between the clogging amount of the expansion device (3) and a production amount of the product; and a computation unit (53) configured to compute the production amount of the product based on the clogging amount of the expansion device (3) detected by the clogging amount detection device and the table or the mathematical formula of production amount,

wherein the clogging amount detection device includes
the memory (51) storing a table or a mathematical formula of Cv value showing a relationship between an opening degree of the expansion device (3) and a theoretical Cv value, and
the computation unit (53) configured to compute an actual Cv value of the expansion device (3) computed from an operation state of the refrigerant circuit, compute the theoretical Cv value of the expansion device (3) in the operation state based on the table or the mathematical formula of Cv value, and compute the clogging amount of the expansion device (3) based on the actual Cv value and theoretical Cv value,
wherein the Cv value is defined by

$$C_V = M\sqrt{\frac{G}{\Delta P}}$$

wherein M represents a flow rate of the refrigerant flowing in the expansion device (3), G represents a specific gravity of the refrigerant, and ΔP represents a pressure difference between before and after the expansion device (3).

3. A refrigeration cycle apparatus comprising:

a refrigerant circuit including at least a compressor (1), a condenser, an expansion device (3), and an evaporator, **characterised by**
using an ethylene based fluorohydrocarbon or a mixture containing the ethylene based fluorohydrocarbon as refrigerant and comprising :

a controller (52) configured to control a rotation speed of the compressor (1) and an opening degree of the expansion device (3);
a clogging amount detection device configured to detect a clogging amount of the expansion device (3); and
a polymerization amount estimation device configured to determine an amount of a product generated through polymerization of the refrigerant,

wherein the clogging amount detection device includes
a memory (51) storing a table or a mathematical formula of Cv value showing a relationship between an opening degree of the expansion device (3) and a theoretical Cv value, and
a computation unit (53) configured to compute an actual Cv value of the expansion device (3) computed from an operation state of the refrigerant circuit, compute the theoretical Cv value of the expansion device (3) in the operation state based on the table or the mathematical formula of Cv value, and compute the clogging amount of the expansion device (3) based on the actual Cv value and theoretical Cv value,
wherein the Cv value is defined by

$$C_V = M\sqrt{\frac{G}{\Delta P}}$$

wherein M represents a flow rate of the refrigerant flowing in the expansion device (3), G represents a specific gravity of the refrigerant, and ΔP represents a pressure difference between before and after the expansion device (3),
wherein the polymerization amount estimation device includes the memory (51) configured to store a table or a mathematical formula for estimating the production amount of the product from a polymerization occurrence pressure operation time corresponding to an operation time of the refrigerant circuit under the condition of the refrigerant being at a predetermined pressure or higher and an integrated value of the polymerization occurrence pressure operation time, and
the computation unit (53) configured to compute the integrated value of the polymerization occurrence pressure operation time and, compute the production amount of the product from the integrated value of the polymerization occurrence pressure operation time based on the table or the mathematical formula for estimating the production amount of the product.

**4.** The refrigeration cycle apparatus of any one of claims 1 to 3,
wherein the polymerization amount estimation device includes a strainer (3a, 3b) disposed on an upstream side of the expansion device (3).

**5.** The refrigeration cycle apparatus of any one of claims 1 to 4,
wherein the polymerization amount estimation device includes
a refrigerant state detection unit configured to detect at least one of a degree of subcooling of the refrigerant, a degree of superheat of the refrigerant, and a discharge temperature of the refrigerant discharged from the compressor (1),
the memory (51) configured to store a threshold value to be compared with a detection result of the refrigerant state detection unit, and
a judgement unit (54) configured to judge whether the detection result of the refrigerant state detection unit exceeds the threshold value.

**6.** The refrigeration cycle apparatus of any one of claims 1 to 5, further comprising the or a judgement unit (54) configured to judge whether a predetermined amount or more of clogging is generated in the expansion device (3), wherein the controller (52) performs clogging elimination control by increasing an opening degree of the expansion device (3), thereby washing the clogging away, when the judgement unit (54) judges generation of a predetermined amount or more of clogging of the expansion device (3).

**7.** The refrigeration cycle apparatus of any one of claims 1 to 6,
wherein the ethylene based fluorohydrocarbon contains any one of fluoroethylene (R1141), trans-1,2 difluoroethylene (R1132(E)), cis-1,2 difluoroethylene (R1132(Z)), 1,1 difluoroethylene (R1132a), and 1,1,2 trifluoroethylene (R1123).

**Patentansprüche**

**1.** Kältekreislaufvorrichtung, enthaltend:

einen Kältemittelkreislauf, der zumindest einen Verdichter (1), einen Kondensator, eine Expansionseinrichtung (3) und einen Verdampfer aufweist, **gekennzeichnet durch** eine Verwendung eines Ethylen-basierten Fluorkohlenwasserstoffs oder eines Gemisches, das den Ethylen-basierten Fluorkohlenwasserstoff als Kältemittel enthält, und enthaltend:

eine Steuereinheit (52), die konfiguriert ist, eine Rotationsgeschwindigkeit des Verdichters (1) und einen Öffnungsgrad der Expansionseinrichtung (3) zu steuern;
eine Verstopfungsgrad-Erfassungseinrichtung, die konfiguriert ist, einen Verstopfungsgrad der Expansionseinrichtung (3) zu erfassen; und
eine Polymerisationsgrad-Schätzeinrichtung, die konfiguriert ist, eine Menge eines Produkts zu bestimmen, das durch Polymerisation des Kältemittels erzeugt wurde,

wobei die Verstopfungsgrad-Erfassungseinrichtung aufweist:
einen Speicher (51), der eine Tabelle oder eine mathematische Formel des Cv-Wertes, der eine Beziehung zwischen einem Öffnungsgrad der Expansionseinrichtung (3) und einem theoretischen Cv-Wert anzeigt, speichert, und
eine Berechnungseinheit (53), die konfiguriert ist, einen tatsächlichen Cv-Wert der Expansionseinrichtung (3), der aus einem Betriebszustand des Kältemittelkreislaufs berechnet wird, zu berechnen, den theoretischen Cv-Wert der Expansionseinrichtung (3) im Betriebszustand auf der Grundlage der Tabelle oder der mathematischen Formel des Cv-Wertes zu berechnen, und den Verstopfungsgrad der Expansionseinrichtung (3) auf der Grundlage des tatsächlichen Cv-Wertes und des theoretischen Cv-Wertes zu berechnen, wobei der Cv-Wert definiert ist durch

$$C_V = M\sqrt{\frac{G}{\Delta P}}$$

wobei M eine Strömungsrate des in der Expansionseinrichtung (3) strömenden Kältemittels darstellt, G ein spezifisches Gewicht des Kältemittels darstellt, und ΔP eine Druckdifferenz zwischen vor und nach der Expansionseinrichtung (3) darstellt,

wobei die Polymerisationsgrad-Schätzeinrichtung aufweist:

den Speicher (51), der konfiguriert ist, eine Tabelle oder eine mathematische Formel zum Schätzen der Erzeugungsmenge des Produkts aus einer Polymerisationsauftrittstemperatur-Betriebszeit, die einer Betriebszeit des Kältemittelkreislaufs unter der Bedingung entspricht, dass das Kältemittel eine vorbestimmte oder höhere Temperatur aufweist, und einem integrierter Wert der Polymerisationsauftrittstemperatur-Betriebszeit, zu speichern, und

die Berechnungseinheit (53) konfiguriert ist, den integrierten Wert der Polymerisationsauftrittstemperatur-Betriebszeit zu berechnen und die Erzeugungsmenge des Produkts aus dem integrierten Wert der Polymerisationsauftrittstemperatur-Betriebszeit auf der Grundlage der Tabelle oder der mathematischen Formel zum Schätzen der Erzeugungsmenge des Produkts zu berechnen.

2. Kältekreislaufvorrichtung, enthaltend:

einen Kältemittelkreislauf, der zumindest einen Verdichter (1), einen Kondensator, eine Expansionseinrichtung (3) und einen Verdampfer aufweist, **gekennzeichnet durch** eine Verwendung eines Ethylen-basierten Fluorkohlenwasserstoffs oder eines Gemisches, das den Ethylen-basierten Fluorkohlenwasserstoff als ein Kältemittel enthält und enthaltend:

eine Steuereinheit (52), die konfiguriert ist, eine Rotationsgeschwindigkeit des Verdichters (1) und einen Öffnungsgrad der Expansionseinrichtung (3) zu steuern;

eine Verstopfungsgrad-Erfassungseinrichtung, die konfiguriert ist, einen Verstopfungsgrad der Expansionseinrichtung (3) zu erfassen;

eine Polymerisationsgrad-Schätzeinrichtung, die konfiguriert ist, eine Menge eines Produkts zu bestimmen, das durch Polymerisation des Kältemittels erzeugt wurde;

einen Speicher (51), der eine Tabelle oder eine mathematische Formel der Erzeugungsmenge speichert, die eine Beziehung zwischen dem Verstopfungsgrad der Expansionseinrichtung (3) und einer Erzeugungsmenge des Produkts anzeigt; und

eine Berechnungseinheit (53), die konfiguriert ist, die Erzeugungsmenge des Produkts auf der Grundlage des Verstopfungsgrads der Expansionseinrichtung (3), der durch die Verstopfungsgrad-Erfassungseinrichtung erfasst wurde, und der Tabelle oder der mathematischen Formel der Erzeugungsmenge, zu berechnen,

wobei die Verstopfungsgrad-Erfassungseinrichtung aufweist:
den Speicher (51), der eine Tabelle oder eine mathematische Formel des Cv-Wertes, der eine Beziehung zwischen einem Öffnungsgrad der Expansionseinrichtung (3) und einem theoretischen Cv-Wert anzeigt, speichert, und

die Berechnungseinheit (53), die konfiguriert ist, einen tatsächlichen Cv-Wert der Expansionseinrichtung (3) zu berechnen, der aus einem Betriebszustand des Kältemittelkreislaufs berechnet ist, den theoretischen Cv-Wert der Expansionseinrichtung (3) im Betriebszustand auf der Grundlage der Tabelle oder der mathematischen Formel des Cv-Wertes berechnet, und den Verstopfungsgrad der Expansionseinrichtung (3) auf der Grundlage des tatsächlichen Cv-Wertes und des theoretischen Cv-Wertes berechnet,

wobei der Cv-Wert definiert ist durch

$$C_V = M\sqrt{\frac{G}{\Delta P}}$$

wobei M eine Strömungsrate des in der Expansionseinrichtung (3) strömenden Kältemittels darstellt, G ein spezifisches Gewicht des Kältemittels darstellt, und ΔP eine Druckdifferenz zwischen vor und nach der Expansionseinrichtung (3) darstellt.

**3.** Kältekreislaufvorrichtung, enthaltend:

einen Kältemittelkreislauf, der zumindest einen Verdichter (1), einen Kondensator, eine Expansionseinrichtung (3) und einen Verdampfer aufweist, **gekennzeichnet durch** eine Verwendung eines Ethylen-basierten Fluorkohlenwasserstoffs oder eines Gemisches, das den Ethylen-basierten Fluorkohlenwasserstoff als ein Kältemittel enthält und enthaltend:

eine Steuereinheit (52), die konfiguriert ist, eine Rotationsgeschwindigkeit des Verdichters (1) und einen Öffnungsgrad der Expansionseinrichtung (3) zu steuern;
eine Verstopfungsgrad-Erfassungseinrichtung, die konfiguriert ist, einen Verstopfungsgrad der Expansionseinrichtung (3) zu erfassen; und
eine Polymerisationsgrad-Schätzeinrichtung, die konfiguriert ist, eine Menge eines Produkts zu bestimmen, das durch Polymerisation des Kältemittels erzeugt wurde,

wobei die Verstopfungsgrad-Erfassungseinrichtung aufweist:
einen Speicher (51), der eine Tabelle oder eine mathematische Formel des Cv-Wertes, der eine Beziehung zwischen einem Öffnungsgrad der Expansionseinrichtung (3) und einem theoretischen Cv-Wert anzeigt, speichert, und
eine Berechnungseinheit (53), die konfiguriert ist, einen tatsächlichen Cv-Wert der Expansionseinrichtung (3), der aus einem Betriebszustand des Kältemittelkreislaufs berechnet wird, zu berechnen, den theoretischen Cv-Wert der Expansionseinrichtung (3) im Betriebszustand auf der Grundlage der Tabelle oder der mathematischen Formel des Cv-Wertes zu berechnen, und den Verstopfungsgrad der Expansionseinrichtung (3) auf der Grundlage des tatsächlichen Cv-Wertes und des theoretischen Cv-Wertes zu berechnen,
wobei der Cv-Wert definiert ist durch

$$C_V = M \sqrt{\frac{G}{\Delta P}}$$

wobei M eine Strömungsrate des in der Expansionseinrichtung (3) strömenden Kältemittels darstellt, G ein spezifisches Gewicht des Kältemittels darstellt, und $\Delta P$ eine Druckdifferenz zwischen vor und nach der Expansionseinrichtung (3) darstellt,
wobei die Polymerisationsgrad-Schätzeinrichtung aufweist:

den Speicher (51), der konfiguriert ist, eine Tabelle oder eine mathematische Formel zum Schätzen der Erzeugungsmenge des Produkts aus einer Polymerisationsauftrittsdruck-Betriebszeit, die einer Betriebszeit des Kältemittelkreislaufs unter der Bedingung entspricht, dass das Kältemittel einen vorbestimmten oder höheren Druck aufweist, und einem integrierten Wert der Polymerisationsauftrittsdruck-Betriebszeit, zu speichern, und
die Berechnungseinheit (53) konfiguriert ist, den integrierten Wert der Polymerisationsauftrittsdruck-Betriebszeit zu berechnen und die Erzeugungsmenge des Produkts aus dem integrierten Wert der Polymerisationsauftretensdruckbetriebszeit auf der Grundlage der Tabelle oder der mathematischen Formel zum Schätzen der Erzeugungsmenge des Produkts zu berechnen.

**4.** Kältekreislaufvorrichtung nach einem der Ansprüche 1 bis 3,
wobei die Polymerisationsgrad-Schätzeinrichtung ein Sieb (3a, 3b) umfasst, das auf einer stromaufwärts gelegenen Seite der Expansionseinrichtung (3) angeordnet ist.

**5.** Kältekreislaufvorrichtung nach einem der Ansprüche 1 bis 4, wobei die Polymerisationsgrad-Schätzeinrichtung aufweist:

eine Kältemittelzustandserfassungseinheit, die konfiguriert ist, zumindest einen von einem Unterkühlungsgrad des Kältemittels, einem Überhitzungsgrad des Kältemittels und einer Auslasstemperatur des aus dem Verdichter (1) ausgelassenen Kältemittels zu erfassen,
den Speicher (51), der konfiguriert ist, einen Schwellenwert zu speichern, der mit einem Erfassungsergebnis der Kältemittelzustandserfassungseinheit zu vergleichen ist, und
eine Beurteilungseinheit (54), die konfiguriert ist, zu beurteilen, ob das Erfassungsergebnis der Kältemittelzustandserfassungseinheit den Schwellenwert überschreitet.

6. Kältekreislaufvorrichtung nach einem der Ansprüche 1 bis 5, ferner umfassend
die oder eine Beurteilungseinheit (54), die konfiguriert ist, zu beurteilen, ob ein vorbestimmter oder größerer Grad an Verstopfung in der Expansionseinrichtung (3) erzeugt wurde,
wobei die Steuereinheit (52) eine Verstopfungsbeseitigungssteuerung durch Erhöhen eines Öffnungsgrades der Expansionseinrichtung (3) durchführt, wodurch die Verstopfung weggespült wird, wenn die Beurteilungseinheit (54) eine Erzeugung eines vorherbestimmten oder größeren Grads an Verstopfung der Expansionseinrichtung (3) beurteilt hat.

7. Kältekreislaufvorrichtung nach einem der Ansprüche 1 bis 6,
wobei der Ethylen-basierte Fluorkohlenwasserstoff irgendeines von Fluorethylen (R1141), trans-1,2-Difluorethylen (R1132(E)), cis-1,2-Difluorethylen (R1132(Z)), 1,1-Difluorethylen (R1132a) und 1,1,2-Trifluorethylen (R1123) enthält.

## Revendications

1. Appareil à cycle de réfrigération comprenant :

un circuit de fluide frigorigène comprenant au moins un compresseur (1), un condenseur, un dispositif de détente (3), et un évaporateur, **caractérisé par** l'utilisation d'un fluorocarbure à base d'éthylène ou d'un mélange contenant le fluorocarbure à base d'éthylène en tant que fluide frigorigène et comprenant :

un contrôleur (52) configuré pour commander une vitesse de rotation du compresseur (1) et un degré d'ouverture du dispositif de détente (3) ;
un dispositif de détection de quantité d'encrassement configuré pour détecter une quantité d'encrassement du dispositif de détente (3) ; et
un dispositif d'estimation de quantité de polymérisation configuré pour déterminer une quantité d'un produit généré par la polymérisation du fluide frigorigène,

dans lequel le dispositif de détection de quantité d'encrassement comprend
une mémoire (51) mémorisant une table ou une formule mathématique de valeur Cv montrant une relation entre un degré d'ouverture du dispositif de détente (3) et une valeur Cv théorique, et
une unité de calcul (53) configurée pour calculer une valeur Cv réelle du dispositif de détente (3) calculée à partir d'un état de fonctionnement du circuit de fluide frigorigène, calculer la valeur Cv théorique du dispositif de détente (3) dans l'état de fonctionnement sur la base de la table ou de la formule mathématique de valeur Cv, et calculer la quantité d'encrassement du dispositif de détente (3) sur la base de la valeur Cv réelle et de la valeur Cv théorique,
dans lequel la valeur Cv est définie par

$$C_v = M\sqrt{\frac{G}{\Delta P}}$$

où M représente un débit du fluide frigorigène s'écoulant dans le dispositif de détente (3), G représente une densité du fluide frigorigène, et $\Delta P$ représente une différence de pression entre avant et après le dispositif de détente (3),
dans lequel le dispositif d'estimation de quantité de polymérisation comprend la mémoire (51) configurée pour mémoriser une table ou une formule mathématique pour estimer la quantité de production du produit à partir d'un temps de fonctionnement à température d'apparition de polymérisation correspondant à un temps de fonctionnement du circuit de fluide frigorigène dans la condition où le fluide frigorigène est à une température prédéterminée ou supérieure et d'une valeur intégrée du temps de fonctionnement à température d'apparition de polymérisation, et
l'unité de calcul (53) configurée pour calculer la valeur intégrée du temps de fonctionnement à température d'apparition de polymérisation et calculer la quantité de production du produit à partir de la valeur intégrée du temps de fonctionnement à température d'apparition de polymérisation sur la base de la table ou de la formule mathématique pour estimer la quantité de production du produit.

**2.** Appareil à cycle de réfrigération comprenant :

un circuit de fluide frigorigène comprenant au moins un compresseur (1), un condenseur, un dispositif de détente (3), et un évaporateur, **caractérisé par** l'utilisation d'un fluorocarbure à base d'éthylène ou d'un mélange contenant le fluorocarbure à base d'éthylène en tant que fluide frigorigène et comprenant :

un contrôleur (52) configuré pour commander une vitesse de rotation du compresseur (1) et un degré d'ouverture du dispositif de détente (3) ;
un dispositif de détection de quantité d'encrassement configuré pour détecter une quantité d'encrassement du dispositif de détente (3) ;
un dispositif d'estimation de quantité de polymérisation configuré pour déterminer une quantité d'un produit généré par la polymérisation du fluide frigorigène ;
une mémoire (51) mémorisant une table ou une formule mathématique de quantité de production montrant une relation entre la quantité d'encrassement du dispositif de détente (3) et une quantité de production du produit ; et
une unité de calcul (53) configurée pour calculer la quantité de production du produit sur la base de la quantité d'encrassement du dispositif de détente (3) détectée par le dispositif de détection de quantité d'encrassement et de la table ou de la formule mathématique de quantité de production,

dans lequel le dispositif de détection de quantité d'encrassement comprend la mémoire (51) mémorisant une table ou une formule mathématique de valeur Cv montrant une relation entre un degré d'ouverture du dispositif de détente (3) et une valeur Cv théorique, et
l'unité de calcul (53) configurée pour calculer une valeur Cv réelle du dispositif de détente (3) calculée à partir d'un état de fonctionnement du circuit de fluide frigorigène, calculer la valeur Cv théorique du dispositif de détente (3) dans l'état de fonctionnement sur la base de la table ou de la formule mathématique de valeur Cv, et calculer la quantité d'encrassement du dispositif de détente (3) sur la base de la valeur Cv réelle et de la valeur Cv théorique,
dans lequel la valeur Cv est définie par

$$C_V = M \sqrt{\frac{G}{\Delta P}}$$

où M représente un débit du fluide frigorigène s'écoulant dans le dispositif de détente (3), G représente une densité du fluide frigorigène, et ΔP représente une différence de pression entre avant et après le dispositif de détente (3).

**3.** Appareil à cycle de réfrigération comprenant :

un circuit de fluide frigorigène comprenant au moins un compresseur (1), un condenseur, un dispositif de détente (3), et un évaporateur, **caractérisé par** l'utilisation d'un fluorocarbure à base d'éthylène ou d'un mélange contenant le fluorocarbure à base d'éthylène en tant que fluide frigorigène et comprenant :

un contrôleur (52) configuré pour commander une vitesse de rotation du compresseur (1) et un degré d'ouverture du dispositif de détente (3) ;
un dispositif de détection de quantité d'encrassement configuré pour détecter une quantité d'encrassement du dispositif de détente (3) ; et
un dispositif d'estimation de quantité de polymérisation configuré pour déterminer une quantité d'un produit généré par la polymérisation du fluide frigorigène,

dans lequel le dispositif de détection de quantité d'encrassement comprend
une mémoire (51) mémorisant une table ou une formule mathématique de valeur Cv montrant une relation entre un degré d'ouverture du dispositif de détente (3) et une valeur Cv théorique, et
une unité de calcul (53) configurée pour calculer une valeur Cv réelle du dispositif de détente (3) calculée à partir d'un état de fonctionnement du circuit de fluide frigorigène, calculer la valeur Cv théorique du dispositif de détente (3) dans l'état de fonctionnement sur la base de la table ou de la formule mathématique de valeur Cv, et calculer la quantité d'encrassement du dispositif de détente (3) sur la base de la valeur Cv réelle et de la valeur Cv théorique,

dans lequel la valeur Cv est définie par

$$C_v = M\sqrt{\frac{G}{\Delta P}}$$

où M représente un débit du fluide frigorigène s'écoulant dans le dispositif de détente (3), G représente une densité du fluide frigorigène, et $\Delta P$ représente une différence de pression entre avant et après le dispositif de détente (3),

dans lequel le dispositif d'estimation de quantité de polymérisation comprend

la mémoire (51) configurée pour mémoriser une table ou une formule mathématique pour estimer la quantité de production du produit à partir d'un temps de fonctionnement à pression d'apparition de polymérisation correspondant à un temps de fonctionnement du circuit de fluide frigorigène dans la condition où le fluide frigorigène est à une pression prédéterminée ou supérieure et d'une valeur intégrée du temps de fonctionnement à pression d'apparition de polymérisation, et

l'unité de calcul (53) configurée pour calculer la valeur intégrée du temps de fonctionnement à pression d'apparition de polymérisation et calculer la quantité de production du produit à partir de la valeur intégrée du temps de fonctionnement à pression d'apparition de polymérisation sur la base de la table ou de la formule mathématique pour estimer la quantité de production du produit.

4. Appareil à cycle de réfrigération selon l'une quelconque des revendications 1 à 3,
   dans lequel le dispositif d'estimation de quantité de polymérisation comprend une crépine (3a, 3b) disposée d'un côté amont du dispositif de détente (3).

5. Appareil à cycle de réfrigération selon l'une quelconque des revendications 1 à 4,
   dans lequel le dispositif d'estimation de quantité de polymérisation comprend
   une unité de détection d'état de fluide frigorigène configurée pour détecter au moins l'un d'un degré de sous-refroidissement du fluide frigorigène, d'un degré de surchauffe du fluide frigorigène, et d'une température de refoulement du fluide frigorigène refoulé du compresseur (1),
   la mémoire (51) configurée pour mémoriser une valeur de seuil à comparer à un résultat de détection de l'unité de détection d'état de fluide frigorigène, et
   une unité de jugement (54) configurée pour juger si le résultat de détection de l'unité de détection d'état de fluide frigorigène dépasse la valeur de seuil.

6. Appareil à cycle de réfrigération selon l'une quelconque des revendications 1 à 5, comprenant en outre la ou une unité de jugement (54) configurée pour juger si une quantité prédéterminée ou plus d'encrassement est générée dans le dispositif de détente (3),
   dans lequel le contrôleur (52) effectue une commande d'élimination d'encrassement en augmentant un degré d'ouverture du dispositif de détente (3), emportant de ce fait l'encrassement, lorsque l'unité de jugement (54) juge la génération d'une quantité prédéterminée ou plus d'encrassement du dispositif de détente (3).

7. Appareil à cycle de réfrigération selon l'une quelconque des revendications 1 à 6,
   dans lequel le fluorocarbure à base d'éthylène contient l'un quelconque du fluoréthylène (R1141), du trans-1,2 difluoroéthylène (R1132(E)), du cis-1,2 difluoroéthylène (R1132(Z)), du 1,1 difluoroéthylène (R1132a), et du 1,1,2 trifluoroéthylène (R1123).

FIG. 1

FIG. 2

FIG. 3

| NAME | CHEMICAL FORMULA |
|------|------------------|
| R1132(E) | |
| R1132(Z) | |
| R1132a | |
| R1123 | |

22

FIG. 4

FIG. 5

FIG. 6

EP 3 012 556 B1

FIG. 8

REFRIGERANT-SHORT
STATE: SC SMALL

NORMAL STATE:
SC LARGE

NORMAL STATE:
Td LOW

REFRIGERANT-SHORT
STATE: Td HIGH

PRESSURE

a

b

NORMAL STATE: SH SMALL

REFRIGERANT-SHORT
STATE: SH LARGE

ENTHALPY

FIG. 9

POLYMERIZATION
OCCURRENCE TIME

INTEGRATION

DAY

FIG. 10

PRODUCTION AMOUNT
OF SLUDGE DUE TO
POLYMERIZATION

INTEGRATED TIME OF
POLYMERIZATION
OCCURRENCE CONDITION

**EP 3 012 556 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2562490 A1
- JP 2010065982 A
- JP 2002098421 A
- WO 9601882 A1
- JP 2009299649 A
- JP 2009250554 A